Europäisches Patentamt

European Patent Office

Office européen des brevets

(19)

(11) **EP 1 310 401 B1**

(12) **FASCICULE DE BREVET EUROPEEN**

(45) Date de publication et mention
de la délivrance du brevet:
**29.03.2006 Bulletin 2006/13**

(51) Int Cl.:
***B60W 10/02*** *(2006.01)* ***B60W 10/06*** *(2006.01)*
***B60W 10/10*** *(2006.01)*

(21) Numéro de dépôt: **02292793.3**

(22) Date de dépôt: **08.11.2002**

(54) **Procédé de changement de rapport descendant sur une transmission automatisée**

Verfahren zum Herunterschalten für ein automatisiertes Getriebe

Method for downshifting an automatised gearbox

(84) Etats contractants désignés:
**DE ES GB IT**

(30) Priorité: **09.11.2001 FR 0114523**

(43) Date de publication de la demande:
**14.05.2003 Bulletin 2003/20**

(73) Titulaire: **Renault s.a.s.**
**92100 Boulogne Billancourt (FR)**

(72) Inventeur: **Sall, Bobo**
**75020 Paris (FR)**

(56) Documents cités:
**EP-A- 0 348 732** **WO-A-89/10282**
**FR-A- 2 581 058** **FR-A- 2 695 359**
**FR-A- 2 793 857** **FR-A- 2 803 254**

**Description**

La présente invention concerne les transmissions automatisées, et plus particulièrement leur comportement lors des changements de rapport descendants.

Plus précisément, elle a pour objet les transmissions automatisées munies d'un embrayage d'entrée et placées sous le contrôle d'un calculateur.

Dans ce type de transmission, les changements de rapports descendants sont réalisés par définition à rupture de couple. Les transmissions automatisées intègrent une fonction de rétrogradage de relance, pendant lequel, en réponse à une accélération forte demandée par le conducteur, va être enclenché le passage d'un rapport inférieur afin de générer une augmentation de couple du moteur. Il peut en résulter pour le conducteur et ses passagers une sensation d'à-coups.

La publication MERCEDES DE 19616 960 traite à ce sujet d'un dispositif d'embrayage automatisé pendant le « décollage » (démarrage du véhicule) ou le passage de vitesse, dans une transmission associée à un moteur DIESEL.

La publication concerne un procédé pour le réglage d'un embrayage automatisé pour un véhicule à moteur à combustion, pendant le « décollage » et/ou le passage de rapport, qui comprend une régulation du régime moteur. Ce dernier dépend du couple d'explosion et est régulé en correspondance avec la position de la pédale d'accélérateur, de la vitesse du véhicule, des consignes de vitesse et du rapport engagé.

Ce procédé comprend en plus une régulation du couple d'embrayage, qui gère ce couple en fonction de la différence entre une consigne liée de la position de la pédale d'accélérateur et la valeur réelle du couple aux roues dérivée du couple moteur. Lorsque les vitesses du moteur et du primaire boîte sont presque ou totalement synchrones, la régulation de couple de l'embrayage est terminée et l'embrayage peut être fermé totalement et rapidement, de manière pilotée. Dans ce temps, le couple d'entraînement du moteur est rendu à l'influence de la pédale et au comportement de la transmission.

Grâce à ce procédé connu, les changements de rapport s'effectuent sans à coups. Toutefois, on ne parvient pas à diminuer de façon significative les temps de rupture de couple, second objectif que les constructeurs se fixent aujourd'hui.

Pour atteindre cet objectif, l'invention consiste en une stratégie de réembrayage anticipé, lors des changements de rapport descendants de relance, au moyen d'un rapide rétablissement de l'accélération du véhicule, après l'engagement du rapport cible. En effet, le réembrayage anticipé permet de réduire notablement la sensation de longueur de la rupture de couple et consiste à rétablir le plus rapidement possible, après l'engagement du rapport à atteindre, le couple de traction du véhicule par une fermeture contrôlée de l'embrayage et une remise du couple moteur pendant que l'embrayage est encore glissant.

La solution proposée consiste donc à piloter conjointement le moteur thermique et l'embrayage en vue de rétablir rapidement l'accélération du véhicule dans un premier temps, puis à contrôler le glissement de l'embrayage pour que l'annulation du glissement soit faite sans à-coups. L'annulation du glissement de l'embrayage correspond à l'arrivée du régime moteur au synchronisme.

Le premier objectif, un rétablissement rapide de l'accélération du véhicule, impose de faire croître rapidement le couple transmissible par l'embrayage car lorsque l'embrayage est glissant,

$$Croues = Cemb * Rboite * Rdesc * \eta$$

Croues = couple roues,
Cemb = couple transmissible par l'embrayage,
Rboîte = rapport de boîte,
Rdesc = rapport de la descente,
$\eta$ = rendement de la boîte de vitesse.

Le second objectif est l'annulation du glissement de l'embrayage sans à-coup.

Lorsque le glissement s'annule, le couple en sortie d'embrayage passe brutalement du couple transmissible par l'embrayage au couple délivré par le moteur. L'écart entre ces deux couples se traduit par un à-coup de couple aux roues au moment de l'annulation du glissement suivi de rebonds.

Pour éviter cela, il faut minimiser l'écart entre le couple transmissible par l'embrayage et le couple moteur, ce qui revient à veiller à avoir un régime moteur quasiment constant lors de l'annulation du glissement, comme le montre l'équation de la dynamique :

$$Cmot - Cemb = Jmot * \frac{d\omega mot}{dt}$$

Cemb= couple transmissible par l'embrayage,
Cmot = couple moteur,
$\omega$mot = régime moteur,
Jmot = inertie du moteur.

L'invention porte sur un procédé de changement de rapport descendant de relance du type N/N-1 ou N/N-2 sur une transmission automatisée munie d'un embrayage d'entrée et placée sous le contrôle d'un calculateur, comprenant une phase initiale de débrayage, une phase de passage de vitesse et une phase de réembrayage.

Ce procédé est caractérisé en ce que ladite phase de réembrayage comprend une première étape pendant laquelle se déroulent une fermeture partielle rapide de l'embrayage et un maintien d'un asservissement du moteur à un régime cible, et une deuxième étape de durant laquelle le glissement de l'embrayage est progressivement supprimé par une action contrôlée sur les couples fourni par le moteur et transmis par l'embrayage.

Selon une autre caractéristique de l'invention, l'asservissement du moteur à un régime cible est initié lors de la phase de passage de vitesses.

Selon une autre caractéristique de l'invention, le régime cible auquel est asservi le moteur correspond à une valeur théorique du régime de synchronisme sur le rapport cible majorée d'une valeur prédéterminée.

Selon une autre caractéristique de l'invention, l'embrayage et le moteur sont pilotés simultanément pendant la première étape de la phase de réembrayage de façon à rétablir rapidement l'accélération ou le couple de traction du véhicule.

Selon une autre caractéristique de l'invention, l'embrayage et le moteur sont pilotés simultanément dès que le rapport N-1 ou N-2 est engagé.

Selon une autre caractéristique de l'invention, l'embrayage et le moteur sont pilotés de façon à rétablir une accélération (ou un couple de traction) du véhicule proche de l'accélération (ou du couple de traction) après le changement de rapport.

Selon une autre caractéristique de l'invention, l'embrayage et le moteur sont pilotés de façon à rétablir une accélération (ou un couple de traction) du véhicule légèrement supérieure à l'accélération (ou au couple de traction) après le changement de rapport.

Selon une autre caractéristique de l'invention, l'embrayage et le moteur thermique sont pilotés de façon à annuler le glissement de l'embrayage sans à-coups lors du réembrayage.

Selon une autre caractéristique de l'invention, l'embrayage et le moteur thermique sont pilotés de façon à avoir une accélération du moteur proche de zéro lors de l'annulation du glissement.

Selon une autre caractéristique de l'invention, le calculateur de la transmission dialogue avec le calculateur de contrôle du moteur et pilote l'embrayage pour contrôler le glissement de l'embrayage ou le régime moteur lors du réembrayage.

Selon une autre caractéristique de l'invention, le calculateur de la transmission envoie des consignes de couple ou de régime au calculateur du moteur thermique lors du réembrayage.

Selon une autre caractéristique de l'invention, l'accélération du régime moteur est contrôlée par le calculateur de la transmission par l'intermédiaire des consignes de couples ou de régimes entre le dégagement du rapport courant et l'engagement du rapport cible.

D'autres caractéristiques de l'invention apparaîtront à la lecture de la description détaillée qui suit pour la compréhension de laquelle on se reportera aux dessins annexés suivants :

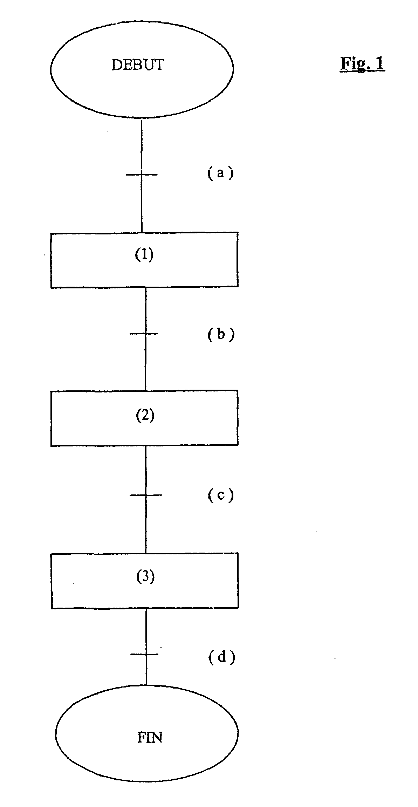

- la figure 1 est une décomposition schématique d'un changement de rapport N/N-1 ou N/N-2, tel qu'il s'effectue communément.

- la figure 2 est une décomposition schématique de la seconde phase, caractéristique du réembrayage anticipé.

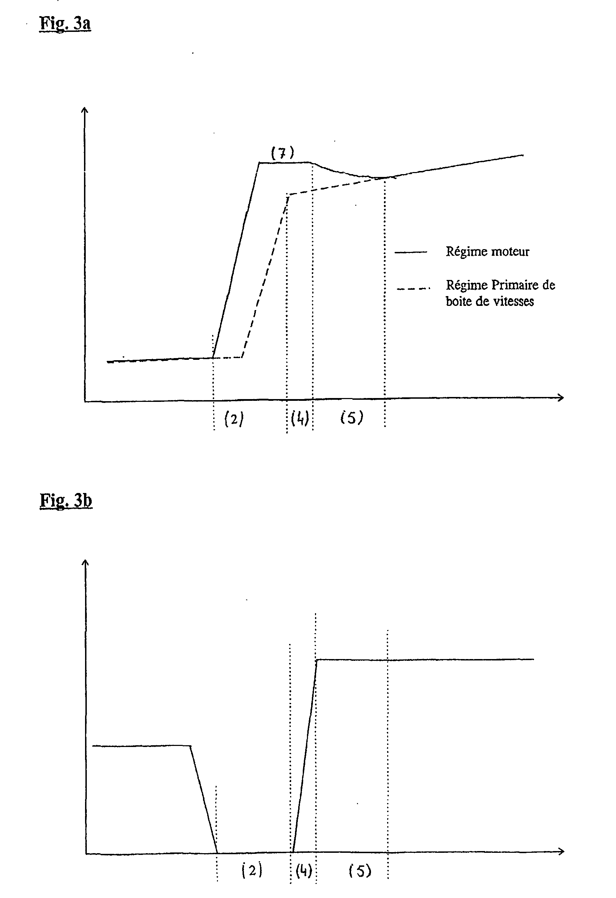

- la figure 3a est un aperçu des courbes, relatives à un changement de rapport descendant de relance, représentant l'évolution du régime moteur et celle du régime primaire de la boite de vitesses en fonction du temps.

- la figure 3b est un aperçu de la courbe, relative à un changement de rapport descendant de relance, représentant l'évolution de l'accélération longitudinale du véhicule en fonction du temps.

Le découpage d'un changement de rapport entre une phase initiale 1, qui va par un débrayage et une décharge du couple moteur nous permettre de transformer la décision (a) d'effectuer un changement de rapport N/N-1 ou N/N-2 en une situation (b) d'ouverture d'embrayage, une phase 2, qui elle va engager le rapport cible N-1 ou N-2 (c) de par le passage de la vitesse, soit successivement le dégagement du rapport, la sélection, la synchronisation et l'engagement, et une ultime phase 3, étape de réembrayage conduisant à une fermeture complète (d) de l'embrayage tout en remettant du couple moteur, est connu de l'art antérieur.

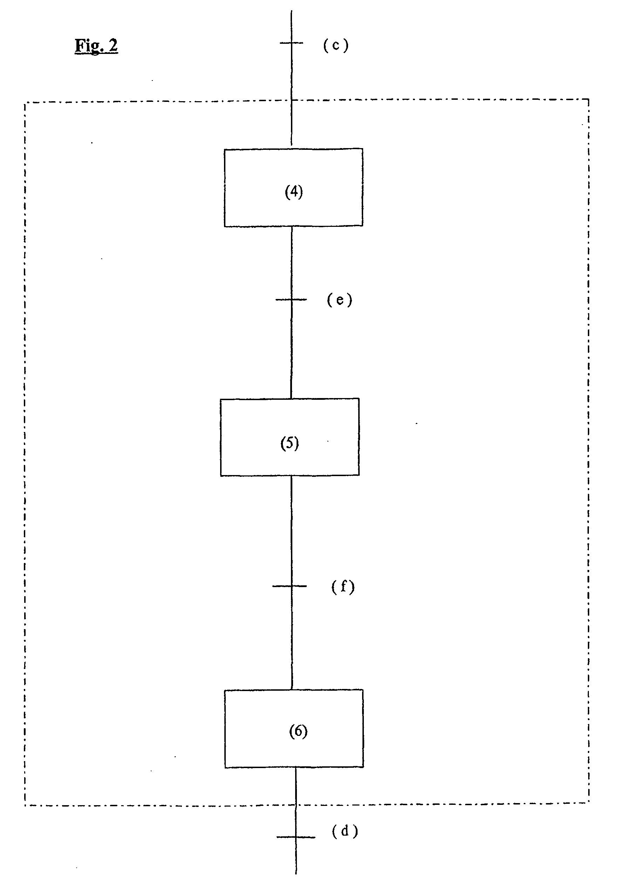

La présente invention porte sur les étapes d'engagement 2 de rapport cible et de réembrayage 3. La figure 2 détaille ladite phase de réembrayage 3, exécutée en trois étapes dans les termes de l'invention.

La stratégie de réembrayage anticipée, objet de l'invention, prend effet dès que le rapport cible N-1 ou N-2 est engagé (c). Préalablement à cette phase de réembrayage 3, et parallèlement au passage de vitesse lors de la phase d'engagement 2, un calculateur associé à la transmission automatisée émet vers un calculateur associé au moteur des consignes de couple ou de régime pour asservir ledit moteur à un régime cible 7 défini par l'addition au régime de synchronisme sur le rapport cible, d'une valeur prédéterminée. On asservit donc le moteur à un régime 7 légèrement supérieur au régime de synchronisme sur le rapport cible. Ceci permettra dans la phase suivante de pouvoir rétablir rapidement l'accélération du véhicule pendant que l'embrayage est glissant.

L'étape 4 procède alors à une fermeture partielle rapide de l'embrayage. Durant toute cette phase , le calculateur de boite continue à asservir le moteur au même régime cible. L'asservissement 7 du régime moteur peut tenir compte du couple transmis par l'embrayage pour mieux assurer ledit asservissement. L'asservissement 7 du régime moteur permet de maintenir du glissement d'embrayage et de rétablir rapidement l'accélération du véhicule en faisant croître le couple transmis par l'embrayage sans que cela ne se provoque des à-coups.

On fait croître le couple transmis par l'embrayage rapidement jusqu'à un niveau d'estompage, niveau pouvant dépendre du point de fonctionnement, de variables issues du véhicule (vitesse véhicule, couple moteur...) et de variables issues d'une analyse du style de conduite (sportivité,...).

La condition (e) de passage à l'étape 5 est d'avoir obtenu par la précédente opération une accélération ou un couple de sortie proche et idéalement légèrement supérieur à respectivement l'accélération ou le couple de sortie théorique de fin du changement de rapport.

Une étape de contrôle 5 succède alors à l'étape 4, ladite étape ayant pour unique objectif la rapidité d'exécution. Pendant l'étape 5, on contrôle le glissement de l'embrayage jusqu'à le rendre nul (f) par une action sur les couples fourni par le moteur et transmis par l'embrayage : simultanément, la consigne de couple moteur est remise au couple demandé par le conducteur suivant une loi dépendant du glissement, de variables issues du véhicule (vitesse véhicule, couple moteur...) et de variables issues d'une analyse du style de conduite (sportivité, ...), et l'embrayage est piloté pour annuler le glissement de l'embrayage et minimiser l'écart entre les accélérations du moteur et de l'arbre primaire de transmission. Cette phase sert à rétablir le couple traction du véhicule en imposant le couple d'embrayage et à faire chuter rapidement le régime moteur pour limiter la dissipation d'énergie dans l'embrayage.

L'ultime étape 6 consiste alors à fermer complètement l'embrayage. Cette phase démarre lorsque les régimes moteur et primaire sont pratiquement égaux. L'embrayage peut être fermé rapidement sans que des à-coups soient ressentis.

Les consignes de couple moteur restent égales au couple qu'aurait délivré le moteur sans intervention de la transmission automatisée.

La solution proposée est applicable à tout véhicule équipé d'une transmission automatisée et d'un moteur thermique à essence ou diesel.

La transmission automatisée est munie d'un calculateur contrôlant l'actionnement de l'embrayage d'entrée et la mécanique interne de boîte. Le moteur à combustion essence ou diesel est muni d'un boîtier papillon motorisé, contrôlé par un calculateur. Le calculateur de la transmission émet des requêtes de couples lents et rapides pendant les changements de rapports vers le calculateur de contrôle du moteur, et ce dernier assure le fonctionnement du moteur et est capable d'agir sur le boîtier papillon motorisé, l'avance à l'allumage pour les moteurs essence et sur le débit de gasoil pour les moteur diesel, en fonction desdites requêtes de couples lent et rapide.

Les fonctions assurées par les deux calculateurs de contrôle moteur et boîte de vitesses robotisée peuvent être implémentées dans un calculateur unique.

En conclusion, l'invention permet de réduire le temps de trou de couple qui correspond au temps pendant lequel l'accélération du véhicule ne correspond pas à celle demandée par le conducteur. La rapidité recherchée est essentielle pour une sensation de temps de rupture de couple très court. En effet, lorsque le véhicule aura atteint son accélération d'après le changement de rapport, le conducteur aura la sensation que le changement de rapport est terminé même si l'embrayage est encore glissant.

La solution pourrait être étendue aux boites de vitesses automatiques.

L'invention n'est nullement limitée au mode de réalisation décrit et illustré qui n'a été donné qu'à titre d'exemple.

**Revendications**

1. Procédé de changement de rapport descendant du type N/N-1 ou N/N-2 sur une transmission automatisée munie d'un embrayage d'entrée et placée sous le contrôle d'un calculateur, comprenant une phase initiale de débrayage (1), une phase de passage de vitesse (2) et une phase de réembrayage (3), **caractérisé en ce que** ladite phase de réembrayage (3) comprend une première étape (4) pendant laquelle se déroulent une fermeture partielle rapide de l'embrayage et un maintien d'un asservissement (7) du moteur à un régime cible, et une deuxième étape (5) durant laquelle le glissement de l'embrayage est progressivement supprimé par une action contrôlée sur les couples fournis par le moteur et transmis par l'embrayage.

2. Procédé de changement de rapport descendant selon la revendication 1, **caractérisé en ce que** l'asservissement (7) du moteur à un régime cible est initié lors de la phase de passage de vitesses (2).

3. Procédé de changement de rapport descendant selon la revendication 1 ou 2, **caractérisé en ce que** le régime cible auquel est asservi le moteur correspond à une valeur théorique du régime de synchronisme sur le rapport cible majorée d'une valeur prédéterminée.

4. Procédé de changement de rapport descendant selon l'une des revendications précédentes, **caractérisé en ce que** l'embrayage et le moteur sont pilotés simultanément pendant la première étape (4) de la phase de réembrayage (3) de façon à rétablir rapidement l'accélération ou le couple de traction du véhicule.

5. Procédé de changement de rapport descendant selon la revendication 4, **caractérisé en ce que** la première étape (4) de la phase de réembrayage (3) débute dès que le rapport N-1 ou N-2 est engagé.

**6.** Procédé de changement de rapport descendant selon l'une des revendications précédentes, **caractérisé en ce que** l'embrayage et le moteur sont pilotés de façon à rétablir une accélération ou un couple de traction du véhicule proche respectivement de l'accélération ou du couple de traction après le changement de rapport.

**7.** Procédé de changement de rapport descendant selon la revendication 6, **caractérisé en ce que** l'embrayage et le moteur sont pilotés de façon à rétablir une accélération ou un couple de traction du véhicule légèrement supérieur respectivement à l'accélération ou au couple de traction après le changement de rapport.

**8.** Procédé de changement de rapport descendant selon l'une des revendications précédentes, **caractérisé en ce que** l'embrayage et le moteur sont pilotés de façon à annuler le glissement de l'embrayage sans à-coups en fin de changement de rapport.

**9.** Procédé de changement de rapport descendant selon la revendication 8, **caractérisé en ce que** l'embrayage et le moteur sont pilotés de façon à avoir une accélération du moteur proche de zéro lors de l'annulation du glissement.

**10.** Procédé de changement de rapport descendant selon l'une des revendications précédentes, **caractérisé en ce que** le calculateur de la transmission dialogue avec le calculateur de contrôle du moteur et pilote l'embrayage pour contrôler le glissement de l'embrayage ou le régime moteur lors du réembrayage.

**11.** Procédé de changement de rapport descendant selon la revendication 10, **caractérisé en ce que** le calculateur de la transmission envoie des consignes de couple ou de régime au calculateur du moteur thermique lors du réembrayage.

**12.** Procédé de changement de rapport descendant selon la revendication 10, **caractérisé en ce que** la décélération du régime moteur est contrôlée par le calculateur de la transmission par l'intermédiaire des consignes de couples ou de régimes entre le dégagement du rapport courant et l'engagement du rapport cible.

**Claims**

**1.** A method of downward change of ratio of the type N/N-1 or N/N-2 in an automatic transmission provided with an input clutch and placed under the control of a computer, comprising an initial stage of declutching (1), a gear transition stage (2) and a reclutching stage (3), **characterised in that** the reclutching stage (3) comprises a first phase (4) during which a rapid partial closure of the clutch and a maintenance of a servo-control (7) of the engine at a target speed takes place, and a second phase (5) during which the sliding of the clutch is progressively suppressed by a controlled action on the torques supplied by the engine and transmitted by the clutch.

**2.** A method of downward change of ratio as claimed in claim 1, **characterised in that** the servo-control (7) of the engine at a target speed is initiated during the gear transition stage (2).

**3.** A method of downward change of ratio as claimed in claim 1 or 2, **characterised in that** the target speed at which the engine is servo-controlled corresponds to a theoretical value of the speed of synchronism with respect to the target ratio increased by a predetermined value.

**4.** A method of downward change of ratio as claimed in one of the preceding claims, **characterised in that** the clutch and the engine are piloted simultaneously during the first phase (4) of the reclutching stage (3) so as rapidly to re-establish the acceleration or the drive torque of the vehicle.

**5.** A method of downward change of ratio as claimed in claim 4, **characterised in that** the first phase (4) of the reclutching stage (3) starts as soon as the ratio N-1 or N-2 is engaged.

**6.** A method of downward change of ratio as claimed in one of the preceding claims, **characterised in that** the clutch and the engine are piloted so as to re-establish an acceleration or a drive torque of the vehicle close to the respective acceleration or drive torque after the change of ratio.

**7.** A method of downward change of ratio as claimed in claim 6, **characterised in that** the clutch and the engine are piloted so as to re-establish an acceleration or a drive torque of the vehicle slightly greater than the respective acceleration or drive torque after the change of ratio.

**8.** A method of downward change of ratio as claimed in one of the preceding claims, **characterised in that** the clutch and the engine are piloted so to cancel out the sliding of the clutch without jolts at the end of the change of ratio.

**9.** A method of downward change of ratio as claimed in claim 8, **characterised in that** the clutch and the engine are piloted so as to have an acceleration of the engine close to zero during the cancellation of the sliding,

**10.** A method of downward change of ratio as claimed in one of the preceding claims, **characterised in that** the transmission computer dialogues with the engine control computer and pilots the clutch in order to control the sliding of the clutch or the engine speed during reclutching.

**11.** A method of downward change of ratio as claimed in claim 10, **characterised in that** the transmission computer sends torque or speed references to the computer of the thermal engine during reclutching.

**12.** A method of downward change of ratio as claimed in claim 10, **characterised in that** the deceleration of the engine speed is controlled by the transmission computer by means of the torque or speed references between the release of the current ratio and the engagement of the target ratio.

**Patentansprüche**

**1.** Verfahren zum Herunterschalten des Ganges vom Typ N/N-1 oder N/N-2 auf einem automatisierten Getriebe, das mit einer Eingangskupplung ausgestattet ist und unter der Kontrolle eines Rechners steht, umfassend eine Startphase des Auskuppelns (1), eine Phase des Übergangs des Gangs (2), eine Phase des Wiedereinkuppelns (3), **dadurch gekennzeichnet, dass** die Phase des Wiedereinkuppelns (3) einen ersten Schritt (4) umfasst, während dem sich ein schnelles partielles Schließen der Kupplung und ein Halten einer Regelung (7) des Motors auf eine Ziel-Drehzahl abspielen, und einem zweiten Schritt (5), während dem das Schleifen der Kupplung zunehmend aufgehoben wird durch ein gesteuertes Einwirken auf die Drehmomente, die vom Motor geliefert werden und durch die Kupplung übertragen werden.

**2.** Verfahren zum Herunterschalten des Ganges gemäß Anspruch 1, **dadurch gekennzeichnet, dass** die Regelung (7) des Motors auf eine Ziel-Drehzahl während der Phase des Übergangs der Gänge (2) begonnen wird.

**3.** Verfahren zum Herunterschalten des Ganges gemäß Anspruch 1 oder 2, **dadurch gekennzeichnet, dass** die Ziel-Drehzahl, auf die der Motor geregelt wird, einem theoretischen Wert der Gleichlaufs-Drehzahl im Ziel-Gang entspricht, erhöht um einen bestimmten Wert.

**4.** Verfahren zum Herunterschalten des Ganges gemäß einem der vorhergehenden Ansprüche, **dadurch gekennzeichnet, dass** die Kupplung und der Motor simultan gesteuert werden während des ersten Schritts (4) der Phase des Wiedereinkuppelns (3), so dass die Beschleunigung oder das Antriebsmoment des Fahrzeugs schnell wieder hergestellt werden.

**5.** Verfahren zum Herunterschalten des Ganges gemäß Anspruch 4, **dadurch gekennzeichnet, dass** der erste Schritt (4) der Phase des Wiedereinkuppelns (3) begonnen wird, sobald der Gang N-1 oder N-2 eingelegt ist.

**6.** Verfahren zum Herunterschalten des Ganges gemäß einem der vorhergehenden Ansprüche, **dadurch gekennzeichnet, dass** die Kupplung und der Motor so gesteuert werden, dass sie eine Beschleunigung oder ein Antriebsmoment des Fahrzeugs wieder herstellen, die nahe der Beschleunigung beziehungsweise dem Antriebsmoment nach dem Wechsel des Ganges sind.

**7.** Verfahren zum Herunterschalten des Ganges gemäß Anspruch 6, **dadurch gekennzeichnet, dass** die Kupplung und der Motor so gesteuert werden, dass sie eine Beschleunigung oder ein Antriebsmoment des Fahrzeugs wieder herstellen, die leicht höher sind als die Beschleunigung beziehungsweise das Antriebsmoment nach dem Wechsel des Ganges.

**8.** Verfahren zum Herunterschalten des Ganges gemäß einem der vorhergehenden Ansprüche, **dadurch gekennzeichnet, dass** die Kupplung und der Motor so gesteuert werden, dass sie das Schleifen der Kupplung am Ende des Wechsels des Gangs ohne Rucken abbrechen.

**9.** Verfahren zum Herunterschalten des Gangs Anspruch 8, **dadurch gekennzeichnet, dass** die Kupplung und der Motor so gesteuert werden, dass man eine Beschleunigung des Motors nahe Null beim Abbruch des Schleifens hat.

**10.** Verfahren zum Herunterschalten des Gangs gemäß einem der vorhergehenden Ansprüche, **dadurch gekennzeichnet, dass** der Rechner des Getriebes mit dem Steuerrechner des Motors kommuniziert und die Kupplung steuert, um das Schleifen der Kupplung oder die Drehzahl des Motors beim Wiedereinkuppeln zu steuern.

**11.** Verfahren zum Herunterschalten des Gangs gemäß Anspruch 10, **dadurch gekennzeichnet, dass** der Rechner des Getriebes Drehmoment- oder Drehzahlanweisungen an den Rechner des Verbrennungsmotors beim Wiedereinkuppeln schickt.

**12.** Verfahren zum Herunterschalten des Gangs gemäß Anspruch 10, **dadurch gekennzeichnet, dass** die Verlangsamung der Motordrehzahl durch den Rech-

**EP 1 310 401 B1**

ner des Getriebes über Drehmoment- oder Drehzahlanweisungen zwischen dem Entfernen des eingelegten Gangs und dem Einlegen des Ziel-Gangs gesteuert wird.

DEBUT

( a )

(1)

( b )

(2)

( c )

(3)

( d )

FIN

**Fig. 1**

**Fig. 2**

(c)

(4)

(e)

(5)

(f)

(6)

(d)

## Fig. 3a

Régime moteur

Régime Primaire de
boite de vitesses

(7)

(2)    (4)    (5)

## Fig. 3b

(2)    (4)    (5)